# EUROPEAN PATENT APPLICATION

(11) **EP 3 493 375 A1**
(43) Date of publication of application: **05.06.2019**
(21) Application number: 17205239.1
(22) Date of filing: 04.12.2017
(51) Int. Cl.: H02K 7/18, H02K 1/18, H02K 3/52, H02K 5/22

(54) **STATOR ASSEMBLY WITH FLEXIBLE CABLING ARRANGEMENTS, GENERATOR AND WIND TURBINE WITH SUCH A STATOR ASSEMBLY**

(30) Priority: 01.12.2017 EP 17204971
(71) Applicant: Siemens Gamesa Renewable Energy A/S, 7330 Brande (DK)
(72) Inventor: AZAR, Ziad, S10 4ED Sheffield (GB); KUMAR, Rajesh, Suleeshwarnpatti 642006 Pollachi (IN); NATARAJAN, Gnanasekar, Adyar 600020 Chennai (IN); SAMANTA, Subhra, 7430 Ikast (DK); SKOUGAARD, Ander Vorm, 7400 Herning (DK)
(74) Representative: Aspacher, Karl-Georg

(57) **Abstract**

There is described a stator assembly comprising (a) a stator frame structure having an outer annular frame with a circular outer edge extending concentrically around a center axis, which defines an axial direction, (b) a plurality of stator segments mounted at the outer edge along a circumferential direction of the outer edge, wherein each stator segment comprises a set of electric coils, a connecting device, and a stator cabling arrangement comprising a set of flexible electric cables arranged to provide electrical connection between each electric coil in the set of electric coils and the connecting device, and (c) a main cabling arrangement connecting the connecting device of each stator segment with an electric power interface for collecting electric power generated by the stator segments. Furthermore, an electric generator and a wind turbine comprising such a stator assembly are described.

## Description

### Field of Invention

The present invention relates to the technical field of electric generators for wind turbines. Specifically, the present invention relates to a stator assembly comprising a plurality of stator segments which are electrically connected in order to forward electric power generated with electric coils. The present invention further relates to an electric generator and a wind turbine with such a stator assembly.

### Art Background

Wind turbines can be erected on-shore or off-shore. Large wind turbines capable of providing electric power up to about 6MW are typically installed off-shore. In particular for maintenance reasons, self-excited generators having a rotor assembly with permanent magnets are employed. In the near future, wind turbines capable of providing an electric power in the order of more than 10MW will be available. For several technical reasons, an electric generator capable of providing more than 10MW of electrical power must have a diameter in the order of 7m or more.

Such large wind turbine generators are typically realized as self-excited generators with an inner stator - outer rotor configuration. Thereby, a plurality of stator segments each comprising several electric coils or windings are mounted one next to each other along a circumferential direction at a circular outer edge of a stator frame structure. A plurality of permanent magnets which, when moving along the stator segments, produce a time alternating magnetic flux through each electric coil are mounted at a circular inner surface of a rotor frame assembly, which is torque proof connected to a rotor and which, in operation, rotates around the stator frame structure. This time alternating magnetic flux induces an electric current in each electric coil. The currents produced in each electric coil respectively by each one of the plurality of stator segments are collected or summed up and yield an electric power output of the generator.

Collecting the plurality of currents produced in the plurality of stator segments by means of an appropriate current transmission arrangement is easy for small or medium sized electric generators which have a diameter of e.g. less than two or three meters. Known current transmission arrangements comprise several massive bus bars for conducting the currents to an electric power interface of the generator. However, in larger electric generators it is obviously more challenging to provide the stator assembly with an appropriate current transmission arrangement as larger generators not only have a larger spatial dimension but also a higher number of stator segments which have to be electrically connected to an electric power interface. In particular, a high number of stator segments require a plurality of electric conductors which have to be mounted in a compact manner in and/or at a stator frame structure of the stator assembly.

There may be a need for providing a stator assembly having a plurality of stator segments with a wiring arrangement which can be realized in a compact manner at low cost and which can be mounted to a stator frame structure of the stator assembly in an easy and effective manner.

### Summary of the Invention

This need may be met by the subject matter according to the independent claims. Advantageous embodiments of the present invention are described by the dependent claims.

According to a first aspect of the invention, there is provided a stator assembly comprising (a) a stator frame structure having an outer annular frame with a circular outer edge extending concentrically around a center axis, which defines an axial direction, (b) a plurality of stator segments mounted at the outer edge along a circumferential direction of the outer edge, wherein each stator segment comprises a set of electric coils, a connecting device, and a stator cabling arrangement comprising a set of flexible electric cables arranged to provide electrical connection between each electric coil in the set of electric coils and the connecting device, and (c) a main cabling arrangement connecting the connecting device of each stator segment with an electric power interface for collecting electric power generated by the stator segments.

This aspect of the invention is based on the idea that the combination of a connecting device and flexible stator and main cabling arrangements is easier and more flexible to handle during mounting and maintenance in comparison to known bus bar structures, which, in particular with increasing generator dimensions, require significant amounts of rigid and heavy material, which is not only more expensive but also significantly more complicated to fit and handle when building up the entire stator assembly.

The plurality of stator segments may be arranged one next to the other along a circular circumference around the center axis. Preferably, two neighboring stator segments are adjacent to each other such that the entire circumference can be exploited for "picking up", by means of the electric coils or windings of the stator segments, the time alternating magnetic flux produced by permanent magnets of a rotor assembly having permanent magnets which, in operation, are traveling next to the circumferential row of stator segments.

In particular in a so called direct drive wind turbine, which has no gear box in between (i) a rotor capturing mechanical energy from the wind and (ii) the electric generator, the described center axis may correspond to or may be aligned with the rotational axis of the wind rotor. With regard to the spatial relationship between the plurality of cabling arrangements and the outer annular frame, the center axis may define the direction of a (shortest) distance between the respective wiring assembly and (an axial side face of) the outer annular frame.

The electric power interface may be any appropriate electric structure which is capable of collecting the individual electric currents respectively the individual power signals and forwarding the same to a power transceiver. In particular, the electric power interface may be either (i) a compact electric structure, in which all electric cables run together, or (ii) a spatially distributed structure, in which wiring assemblies are spatially combined at different positions.

The power transceiver may be a power converter which is electrically connected between the electric power interface and a utility grid, preferably trough a transformer. In order to provide an AC power signal that is matched with the AC frequency of the utility grid, the power converter may comprise a generator side AC-DC converter, an intermediate DC bridge, and a grid side DC-AC converter. The AC-DC converter and the DC-AC converter comprise several high power semiconductor switches which, in a known manner, are arranged in a bridge configuration for each phase of an entire AC power signal provided by the electric generator. By controlling the high power semiconductor switches with an appropriate switching pattern, the AC frequency of a power signal delivered to the utility grid can be adapted in a known manner to the (given) AC frequency of the utility grid.

The stator segments may comprise a plurality of stator teeth for supporting the electric coils. More specifically, the electrical coils may be concentrated or distributed around the stator teeth.

In the context of this document "radially" and "radial direction" means perpendicular to the "axial direction" which is aligned with the "center axis". In a cylindrical coordinate system, which is used in this document for describing the geometry of the stator assembly, the "axial direction" along the center line corresponds to the "height coordinate" and the "radial direction" corresponds to the Euclidean distance between the "center axis" and a point of interest. Further, "outer" means radially outer, i.e. a position having a larger Euclidean distance, and "inner" means radially inner, i.e. a position having a smaller Euclidean distance.

According to an embodiment of the invention, each stator segment comprises a mounting plate which is mechanically connected to the outer edge, and the stator cabling arrangement of each stator is arranged on the corresponding mounting plate.

The mounting plate may in particular have an arc-like shape extending in a radial plane relative to the center axis and being positioned at an end portion of the stator segment in the axial direction. The mounting plate is designed to allow a stable mechanical connecting with the outer edge of annular frame, e.g. by means of bolts and nuts. Arranging the flexible electric cables of the stator cabling arrangement on the mounting plate, i.e. on a surface of the mounting plate, can easily be carried out during assembly of the stator assembly, where the assembly personnel will have easy access to the mounting plate surface. Furthermore, the flexibility of the cables makes it fairly easy to arrange them as desired and possible in view of other constraints.

It should be noted that a further mounting plate (with or without a cabling arrangement) may also be provided at the opposite end of the stator segment (as seen in the axial direction).

According to a further embodiment of the invention, the stator cabling arrangement of each stator segment is supported by cable holders which are attached to the corresponding mounting plate.

The cable holders, which may e.g. be clamps, hooks or brackets, provide an easily accessible and secure support for the cables of the stator cabling arrangement. Further security may be added by using strips and/or an adhesive.

According to a further embodiment of the invention, the connection device of each stator segment is arranged at a circumferential end portion of the corresponding mounting plate.

In other words, the connection device may be arranged at an end of the arc-shaped mounting plate.

According to a further embodiment of the invention, the connection device has the shape of a box or a panel.

According to a further embodiment of the invention, the connection device comprises a first set of terminals connected to the stator cabling arrangement and a second set of terminals connected to the main cabling arrangement.

The first and second sets of terminals may be identical in the sense that cables of both the stator cabling arrangement and the main cabling arrangement may be connected to the same terminals. However, it is preferable that the first and second sets of terminals are constituted by separate terminals. In the latter case, connections may be provided between corresponding terminals of the first and second set.

According to a further embodiment of the invention, the first and/or second set of terminals comprises at least one of pins, sockets, clamps, and plugs.

According to a further embodiment of the invention, the main cabling arrangement comprises flexible electric cables.

The flexible cables allow for easier installation taking other space limiting constraints into consideration.

According to a further embodiment of the invention, the main cabling arrangement is supported by cable holders which are attached to the outer annular frame.

The cable holders, which may e.g. be clamps, hooks or brackets, provide an easily accessible and secure support for the cables of the main cabling arrangement. Further security may be added by using strips and/or an adhesive.

In preferred embodiments, the cable holders on both the mounting plates and on the outer annular frame fixation means may in particular be made from a glass fiber composite material or a plastic material.

According to a further embodiment of the invention, the set of electric coils of each stator segment comprises a first electric coil associated with a first phase of a three-phase current, a second electric coil associated with a second phase of the three-phase current, and a third electric coil associated with a third phase of the three-phase current.

According to a further embodiment of the invention, each electric coil in the set of electric coils of each stator segment comprises a plurality of sub-coils interconnected by flexible electric cables.

By interconnecting a number of sub-coils to thereby form a complete coil provides flexibility with regard to design of the coil arrangement on the stator segment.

According to a further embodiment of the invention, each stator segment comprises a further set of electric coils and a further connecting device, and the stator cabling arrangement comprises a further set of flexible electric cables arranged to provide electrical connection between each electric coil in the further set of electric coils and the further connecting device.

The further set of electric coils provides a separate system which can produce electric power independently from and in parallel with the system provided by the (original) set of electric coils. Having two or more systems on each stator segment provides an increased flexibility and stability with regard to power production since the separate systems may be turned on or off in view of other conditions and since a failure in one system will not prevent other systems from continuing power production.

According to a second aspect of the invention, there is provided an electric generator, in particular an electric generator for a wind turbine, the electric generator comprising (a) a stator assembly as set forth in any one of the preceding claims, and (b) a rotor assembly, which is configured and supported such that it can rotate around the center axis, wherein the electric generator in particular has an inner stator - outer rotor configuration.

It should be noted, however, that the present invention is equally applicable to an electric generator having an outer stator - inner rotor configuration.

The described electric generator is based on the idea that the combination of a connecting device and flexible stator and main cabling arrangements is easier and more flexible to handle during mounting and maintenance within a housing of the generator in comparison to known bus bar structures, which are heavy and inflexible. Specifically, the electric cables can be bent in such a manner that spatial limitations and/or constraints given within the housing of the generator for the electric cabling of the stator segments can be met.

For the sake of clarity, it should be noted that in the described (optional) inner stator - outer rotor configuration, the stator segments comprising electric coils are oriented radially in the outer direction. Magnets of the rotor assembly produce, during normal operation, a time varying magnetic field at the stator segments. Thereby, the magnets may in particular be permanent magnets, which are arranged at the inner side of an outer wall of the rotor assembly. For attaching the magnets, axially oriented slots may be provided at this inner side, such that the magnets can be axially inserted into these slots. Furthermore, in between the stator segments and the (permanent) magnet there is provided an air gap. The mechanical stability of both the stator assembly and the rotor assembly must be sufficiently high to ensure that a mechanical contact between the stator segments and the (permanent) magnets is excluded at any time. As an alternative to permanent magnets, electrically excited magnets can also be used without deviating from the scope of the present invention.

According to a further embodiment of the invention, the outer annular frame has an outer diameter larger than 4m, in particular larger than 8m, and more particular larger than 9m.

With regard to the radial extension or dimension of the electric generator, it should be clear that the larger the electric generator is, the larger the electric cabling arrangements must be in order to provide for a reliable electric contact of the stator segments. Specifically, a large stator assembly requires long electric cables. In this context it should be clear that, with the (flexible) electric cables of the described main cabling arrangement, stator segments, which are arranged along a long circular outer edge, can be electrically connected in an easy and reliable manner.

The radially outer dimension of the outer frame structure of the stator assembly or alternatively the radially outer side of the rotor assembly may define the geometric dimension of the described electric generator along the radial direction perpendicular to the center axis respectively the rotational axis.

According to a third aspect of the invention, there is provided a wind turbine for generating electrical power, in particular an off-shore wind turbine, the wind turbine comprising (a) a tower, (b) a rotor arranged at a top portion of the tower and comprising at least one blade, and (c) an electric generator as set forth above, wherein the electric generator is mechanically coupled with the rotor.

In a further aspect of the invention, the electric coils are located in stator slots of the stator and comprise respective end windings. The electric coils comprise a concentrated winding structure, i.e. two electrical conductors of a coil are connected to each other by a respective end winding / by respective end windings and are located in adjacent stator slots. The concentrated winding structure provides a compact stator design with reduced amount of copper for the end windings. Alternatively, the electric coils comprise a distributed winding structure i.e. two electrical conductors of a coil are connected to each other by a respective end winding / by respective end windings and are located in each fourth stator slot in a three-phase system.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

Figure 1 shows a wind turbine comprising an electric generator according to an embodiment of the invention.
Figure 2 shows a stator assembly with a plurality of stator segments mounted at the outer edge of an outer annular frame.
Figure 3 shows a stator segment.
Figure 4 shows the outer annular frame.
Figure 5 shows a close-up view of a part of the stator segment shown in Figure 3.

### Detailed Description

The illustration in the drawing is schematic. It is noted that in different figures, similar or identical elements are provided with the same reference numerals or with reference numerals which differ only within the first digit. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously, all such spatially relative terms refer to the orientation shown in the figures only for ease of description and are not necessarily limiting as an apparatus according to an embodiment of the invention can assume orientations different than those illustrated in the figures when in use.

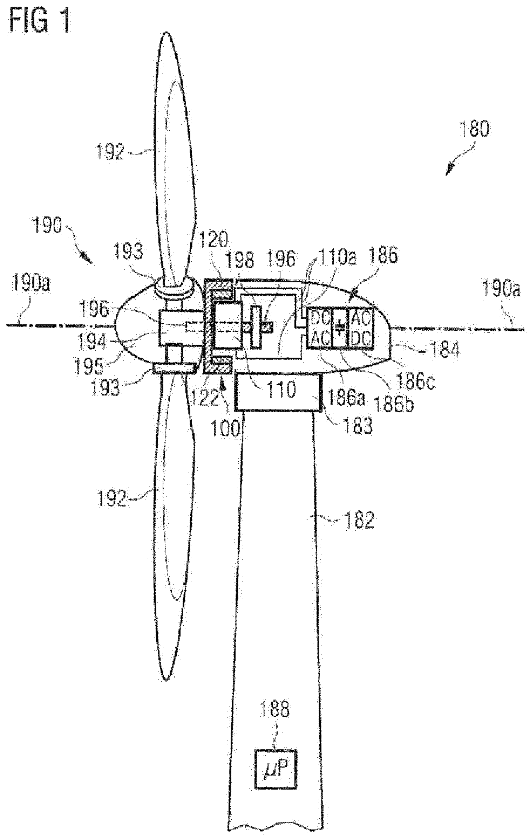

Figure 1 shows a wind turbine 180 according to an embodiment of the invention. The wind turbine 180 comprises a tower 182, which is mounted on a non-depicted fundament. A nacelle 184 is arranged on top of the tower 182. In between the tower 182 and the nacelle 184, there is provided a yaw angle adjustment device 183, which is capable of rotating the nacelle 184 around a non-depicted vertical axis, which is basically aligned with the longitudinal extension of the tower 182. By controlling the yaw angle adjustment device 183 in an appropriate manner, it can be ensured that the nacelle 184 is always properly aligned with the current wind direction during normal operation of the wind turbine 180.

The wind turbine 180 further comprises a rotor 190 having three blades 192. In the perspective of Figure 1 only two blades 192 are visible. The rotor 190 is rotatable around a rotational axis 190a. The blades 192, which are mounted at a hub 194, extend radially with respect to the rotational axis 190a.

In between the hub 194 and each blade 192 there is provided a respective blade adjustment device 193 in order to adjust the blade pitch angle of the respective blade 192 by rotating the respective blade 192 around a non-depicted axis which is substantially parallel with the longitudinal extension of the blade 192. By controlling the blade adjustment device 193, the blade pitch angle of the respective blade 192 can be adjusted in such a manner that at least when the wind is not too strong, a maximum amount of power can be retrieved from the available wind power. However, the blade pitch angle can also be intentionally adjusted to a position, in which only a reduced wind power can be captured.

A spinner structure 195 covers the hub 195. By means of the spinner structure 195, which may also be denoted a nose cone, functional elements such as the blade adjustment devices 193 will be protected from rough external environmental impacts.

At the nacelle 184 there is provided an electric generator 100. In accordance with basic principles of electrical engineering, the electric generator 100 comprises a stator assembly 110 and a rotor assembly 120. As can be seen from Figure 1, the electric generator 100 is located between a front end of the nacelle 184 and the hub 194.

According to the embodiment described here the electric generator 100 is realized with a so called inner stator - outer rotor configuration. Permanent magnets 122 attached to a rotor frame structure of the rotor assembly 120 travel around non-depicted stator segments which are attached at a stator frame structure of the stator assembly 110. In between the stator segments, which comprise coils or windings for picking up a time alternating magnetic induction, and the permanent magnets, an air gap is formed.

According to the exemplary embodiment described here, the stator assembly 110 has an outer diameter in the order of 10m and the air gap has a size of 10mm. From these dimensions one can recognize that there are extreme high demands regarding the mechanical precision and stability for both the stator assembly 110 and the rotor assembly 120. Further, it should be clear that the large size of the spatial arrangement of the entirety of all stator segments requires a suitable electric wiring or cabling arrangement for forwarding the electric power that is generated by (the coils of) the stator segments to an electric power transceiver. According to the exemplary embodiment described here, this electric power transceiver is a power converter 186 which is described below in more detail.

The rotor 190 is rotationally coupled with the rotor assembly 110 by means of a rotatable shaft 196. A schematically depicted bearing assembly 198 is provided to hold both the wind rotor 190 and the rotor assembly 120 in place. As can be seen from Figure 1, the shaft 196 extends along the rotational axis 190a. The rotational axis 190a is identical with a center axis of the stator assembly 110.

It is mentioned that there is also a non-depicted bearing assembly which is located within the generator 100. This bearing assembly supports the shaft 196 within the region where the shaft 196 is indicated with dashed lines.

It is further mentioned that the wind turbine 180 is a so called direct drive wind turbine, in which no gear box is provided between rotor 190 and rotor assembly 110. However, it is mentioned that the electric generator 100 could also be driven indirectly via a gear box, which may be used to convert the number of revolutions of the wind rotor 190 typically into a higher number of revolutions of the rotor assembly 120.

In order to provide an AC power signal being matched with a utility grid, the electric output of the stator assembly 110 is electrically connected to the above-mentioned power converter 186 by means of a three-phase electric cable assembly. The respective cables are denominated with reference numeral 110a. The power converter 186 comprises a generator side AC-DC converter 186a, an intermediate DC bridge 186b, and a grid side DC-AC converter 186c. The AC-DC converter 186a and the DC-AC converter 196c comprise several non-depicted high-power semiconductor switches which, in a known manner, are arranged in a bridge configuration for each phase of AC current provided by the electric generator 100.

The wind turbine 180 further comprises a control system 188 for operating the wind turbine 100 in a highly efficient manner. Apart from controlling for instance the yaw angle adjustment device 183, the depicted control system 188 is also used for adjusting the blade pitch angle of the blades 192 of the wind rotor 190 in an optimized manner.

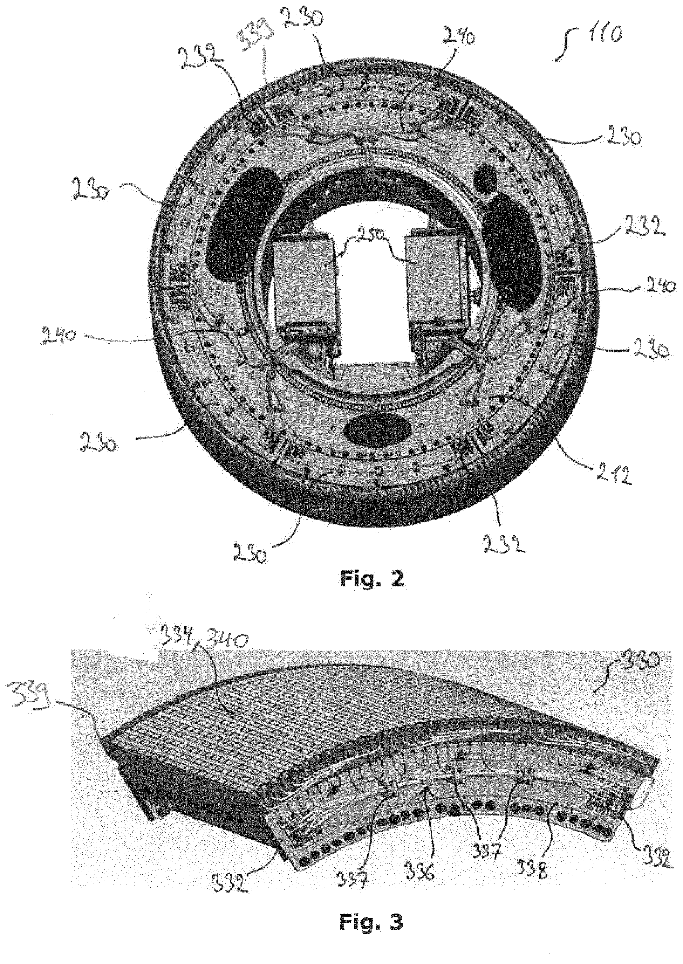

Figure 2 shows the stator assembly 110 with a plurality of stator segments 230 (more specifically six stator segments) mounted circumferentially along the outer edge of an outer annular frame 212. Each stator segment comprises two sets of electric coils (see below), two connecting devices 232, and a stator cabling arrangement (see below) connecting the electric coils of one of the sets with a corresponding one of the connecting devices 232. A main cabling arrangement 240 connects the connecting devices 232 to one of two electric power interfaces 250 for collecting electric power generated by the stator segments. The two sets of electric coils on each stator segment 230 provide two separate power generation systems (each having three phases). More than two power generation systems may be provided, in which case additional connecting devices 232 will be provided. In the depicted embodiment, the two connecting devices 232 of each stator segment 230 are provided at opposite ends of the stator segment 230 in the circumferential direction. Additional connecting devices 232 may be arranged between these. The main cabling arrangement 240 is formed of three bundles of flexible cables, each bundle being separated by 120° and connecting four respective connecting devices to the power interfaces 250.

Figure 3 shows a stator segment 330 in more detail. As shown, the electric coils 334 are concentrated around stator teeth and formed as a multi-layer mesh structure on the outer surface of the segment 330. The stator segment 330 comprises a mounting plate 338 for being mechanically connected (preferably by means of bolts and nuts) to the outer edge of the outer annular frame 212. The connecting devices 332 are arranged at the circumferentially opposite ends of the mounting plate 338. Furthermore, the stator cabling arrangement 336 is arranged at the surface of the mounting plate 338 and held in place by cable holders 337. As shown, the connecting devices 332 comprise a number of terminals (corresponding to the number of phases plus ground) suitable for being connected to the corresponding flexible cables of the main cabling arrangement 240 shown in Figure 2.

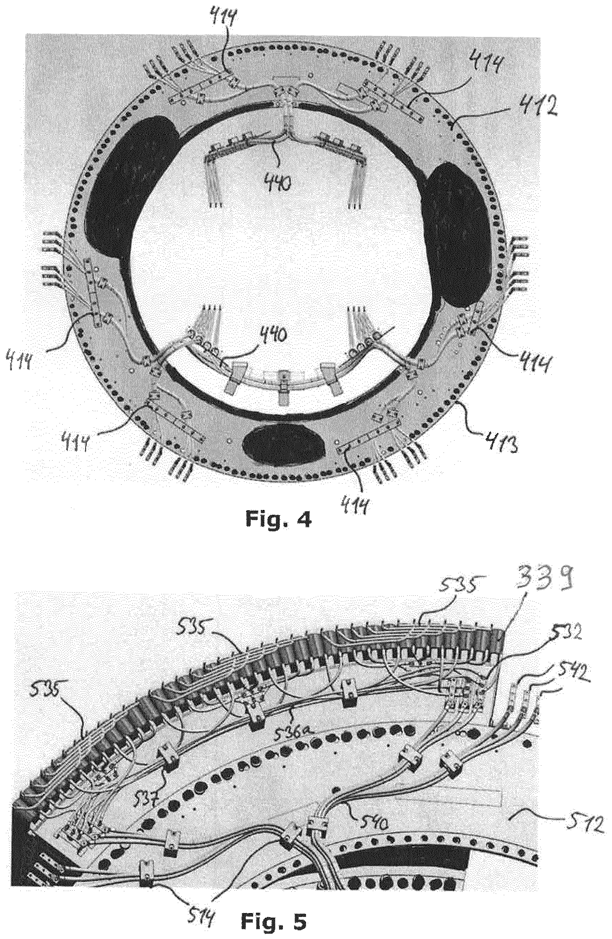

Figure 4 shows the outer annular frame 412 in a separate view. As shown, the outer annular frame 412 comprises the circular outer edge 413 extending concentrically around the center axis. On the surface of the outer annular frame 412, a number of cable holders 414 are arranged to support the flexible cables of the main cabling arrangement 440.

Figure 5 shows a close-up view of a part of the stator segment 330 shown in Figure 3 and the corresponding part of the outer annular frame 512. Here, the flexible cables 536a belonging to the stator cabling arrangement 536, which is held in place or supported by cable holders 537, are shown in more detail. As shown, each cable 536a provides connection between one of the electric coils and one of the connecting devices 532. Also shown are a number of flexible cables 535 interconnecting sub-coils to thereby form the complete electric coils. The flexible cables of the main cabling arrangement 540 terminate in plate-shaped connectors 542 (one for each phase of the corresponding system) with holes designed to fit corresponding terminals in the connecting devise 532. In this embodiment, the connectors 542 are fastened to the connecting device 532 by nuts. However, other feasible ways of connecting the connectors 542 and connecting devices 532 may also be used, such as clamps.

As shown and discussed above, the stator assembly of the present invention is easier to mount and maintenance due to the use of flexible cables. Furthermore, it is cheaper and more lightweight than traditional stator assemblies utilizing bus bars.

In figures 2, 3 and 5, the electric coils 334 are located in stator slots 340 of the stator and comprise respective end windings 339. The electric coils 334 comprise a concentrated winding structure, i.e. two electrical conductors of a coil 334 are connected to each other by a respective end winding 339/ by respective end windings 339 and are located in adjacent stator slots 340. Alternatively (not shown), the electric coils 334 comprise a distributed winding structure i.e. two electrical conductors of a coil 334 are connected to each other by a respective end winding 339/ by respective end windings 339 and are located in each fourth stator slot 340 in a three-phase system.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A stator assembly (110) comprising
a stator frame structure having an outer annular frame (212, 412, 512) with a circular outer edge (413) extending concentrically around a center axis (190a), which defines an axial direction,
a plurality of stator segments (230) mounted at the outer edge along a circumferential direction of the outer edge, wherein each stator segment comprises a set of electric coils (334), a connecting device (232, 332), and a stator cabling arrangement (336) comprising a set of flexible electric cables arranged to provide electrical connection between each electric coil in the set of electric coils and the connecting device, and
a main cabling arrangement (240) connecting the connecting device of each stator segment with an electric power interface (250) for collecting electric power generated by the stator segments.

2. The stator assembly according to the preceding claim, wherein each stator segment comprises a mounting plate (338) which is mechanically connected to the outer edge, and wherein the stator cabling arrangement of each stator is arranged on the corresponding mounting plate.

3. The stator assembly according to the preceding claim, wherein the stator cabling arrangement of each stator segment is supported by cable holders which are attached to the corresponding mounting plate.

4. The stator assembly according to claim 2 or 3, wherein the connection device of each stator segment is arranged at a circumferential end portion of the corresponding mounting plate.

5. The stator assembly according to any of the preceding claims, wherein the connection device has the shape of a box or a panel.

6. The stator assembly according to any of the preceding claims, wherein the connection device comprises a first set of terminals connected to the stator cabling arrangement and a second set of terminals connected to the main cabling arrangement.

7. The stator assembly according to the preceding claim, wherein the first and/or second set of terminals comprises at least one of pins, sockets, clamps, and plugs.

8. The stator assembly according to any of the preceding claims, wherein the main cabling arrangement comprises flexible electric cables.

9. The stator assembly according to any of the preceding claims, wherein the main cabling arrangement is supported by cable holders which are attached to the outer annular frame.

10. The stator assembly according to any of the preceding claims, wherein the set of electric coils of each stator segment comprises a first electric coil associated with a first phase of a three-phase current, a second electric coil associated with a second phase of the three-phase current, and a third electric coil associated with a third phase of the three-phase current.

11. The stator assembly according to any of the preceding claims, wherein each electric coil in the set of electric coils of each stator segment comprises a plurality of sub-coils interconnected by flexible electric cables.

12. The stator assembly according to any of the preceding claims, wherein each stator segment comprises a further set of electric coils and a further connecting device, and wherein the stator cabling arrangement comprises a further set of flexible electric cables arranged to provide electrical connection between each electric coil in the further set of electric coils and the further connecting device.

13. An electric generator, in particular an electric generator for a wind turbine, the electric generator comprising
a stator assembly as set forth in any one of the preceding claims, and
a rotor assembly, which is configured and supported such that it can rotate around the center axis,
wherein the electric generator in particular has an inner stator - outer rotor configuration.

14. The electric generator as set forth in the preceding claim, wherein
the outer annular frame has an outer diameter larger than 4m, in particular larger than 8m, and more particular larger than 9m.

15. The electric generator as set forth in the preceding claim, wherein
the electric coils (334) comprise a concentrated winding structure.

16. The electric generator as set forth in one of the claims 1 to 14, wherein
the electric coils (334) comprise a distributed winding structure.

17. A wind turbine for generating electrical power, in particular an off-shore wind turbine, the wind turbine comprising
a tower,
a rotor arranged at a top portion of the tower and comprising at least one blade, and
an electric generator as set forth in claim 13 or 14, wherein the electric generator is mechanically coupled with the rotor.
